# EUROPEAN PATENT APPLICATION

(11) **EP 4 748 537 A1**
(43) Date of publication of application: **27.05.2026**
(21) Application number: 24214876.5
(22) Date of filing: 22.11.2024
(51) Int. Cl.: B25J 9/16

(54) **A METHOD AND SYSTEM FOR ANALYZING A MOTION BEHAVIOR OF A ROBOT DURING A SUDDEN STOP**

(71) Applicant: Siemens Industry Software Ltd., 7019900 Airport City (IL)
(72) Inventor: Hazan, Moshe, 4083918 Elad (IL)
(74) Representative: Siemens Patent Attorneys

(57) **Abstract**

System and a method for analyzing a motion behavior of a robot during a sudden stop. Data on a 3D robotic study, comprising at least a virtual robot and its robotic locations list path, are received. The system simulates the robot's motion between one or more robotic location-couples of the path; further including the step of applying a stop motion AI-trained predictor for at least one location couple by inputting a set of location couple descriptors and a stop category type to receive as output the corresponding robot's stop poses list. The system analyzes the motion behavior of the robot based on the received robot's stop poses.

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems). More specifically, the disclosure is directed to production environment simulation. The present disclosure is also directed to the control and/or command of a robot based on a robotic simulation result.

### BACKGROUND OF THE DISCLOSURE

In some industrial scenarios, to validate robotic operations at the shopfloor, manufacturing companies often make use of different types of robotic software applications interacting with each other like for example virtual robotic simulation systems, 3D robotic applications, Virtual Robotic Controllers ("VRC"), robotic software applications that use Realistic Robotic Simulations ("RRS") and others.

Examples of virtual robotic simulation systems include, but are not limited to, Computer Assisted Robotic ("CAR") tools, Process Simulate (a product of Siemens PLM software suite), robotic simulation software tools, and other virtual systems for simulation of industrial robots, herein simply called robotic simulation tools. Robotic simulation tools are often used to design, simulate, validate and optimize the robotic manufacturing operations also for virtual commissioning and offline programming.

To ensure safety and prevent accidents, it is crucial that the impacts of sudden robotic stops are taken into consideration for the robots and their surroundings. Robotic stops may occur in scenarios of emergency, risk, electricity power off etc. but they can be part of routine stops as well. As used herein the terms "sudden robotic stops" or simply "sudden stops" denote the robotic stops that in the art are classified according to the following three categories or types:
- Stop Category 0: uncontrolled stop due to immediate removal of power to the machine actuators;
- Stop Category 1: controlled stop with power available to the machine actuators to achieve the stop, followed by power removal;
- Stop Category 2: controlled stop with power left available to the machine actuators.

For example, when a Stop Category 0 occurs, the robot deviates from its programmed trajectory and planned motion. For safety reasons, it is essential to consider this deviation when designing the robotic cell layout to prevent any potential collisions, regardless of where a Stop Category 0 might occur. Additionally, for Stop Categories 1 and 2, although these stops are controlled stops, it is essential to ensure that the robot can stop in time to avoid hitting any objects within its stop trajectory.

In the art, to analyze the realistic motion behavior of robots in case of Stop Categories 0, 1 or 2, it is necessary to obtain motion data coming from the extended RRS1 interface and/or from the VRC module provided by the robot's vendors.

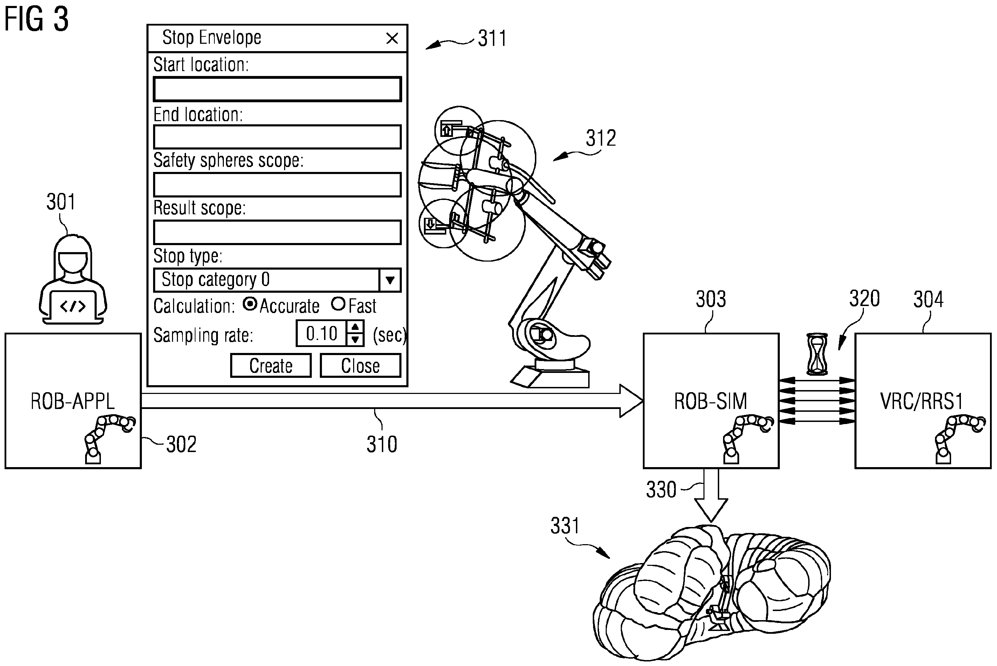

Figure 3 illustrates a block diagram of an example of estimation of a robot's swept volume accounting for sudden robotic stop deviations in accordance with the prior art.

The industrial user 301 wishes to analyze the robot's motion in case of a sudden stop of Stop Category 0. In fact, if the robot unexpectedly terminates its motion, it usually deviates from the planned motion due to inertia until it will actually stop any moving. Specifically, in this example shown in Figure 3, the user's motion analysis refers to the robot's stop envelope 331 accounting for the motion deviations caused by a robot's Stop Category 0. This swept volume estimation 331 is based on the stop motion deviation calculation results provided by the RRS1/VRC module 304. The user 301 makes use of the 3D robotic application module 302 and of the robotic simulation module 303 to analyze the robot's stop motion behavior via a stop envelope functionality 311.

For explanatory and simplification purposes, in this drawing of Figure 3, the 3D robotic application module 302 (where the user loads the virtual robotic cell) is depicted to be distinct from the robotic simulation module 303 (where robotic simulation outcomes are computed). However, the skilled persons are aware that there exist robotic simulation tools, such as Process Simulate, that can integrate both the 3D application module and the simulation module 302, 303 within a single software system. The term "3D robotic application module" or simply "robotic application module" 302 is herein used to denote the 3D visual software application interacting with the robotic simulation module 303. In the art, the terms "robotic simulation module" or simply "simulation module" 303 usually denote a robotic simulation engine with a mathematical motion planner. As used herein, the terms "robotic simulation module" or simply "simulation module" may also refer to a robotic simulation predictor which is configured to predict simulation results without executing a full robotic simulation with a mathematical motion planner. For example, a robotic simulation predictor may use an Artificial Intelligence ("AI")-based motion planner as taught in the technique for predicting motion outcome data of a robot moving along its path in US application number 17/295,541 filed on July 18, 2019.

The user 301 loads a factory study (not shown) in the 3D robotic application 302. Utilizing an Application Program Interface ("API") extension of the RRS1 interface 304, provided by robot vendors Kuka and Fanuc, the user 301 can analyze a robot's motion in the event of sudden stops across various stop categories.

In this example, the user 301 employs a Process Simulate functionality to estimate the robot's stop envelope 331 for stop category 0. The user 301 opens the UI dialog box 311 of the stop envelop functionality and selects several input data 310 including the stop category type, the start location, the end location and the graphical spheres to be attached to the robot's gripper 312. Using this stop envelope functionality, the user 301 can construct the stop envelope 331 by creating resource spheres and attaching them to the robot's gripping tool 312 to account for all the possible places the spheres can reach during simulation. The user clicks the create button in the dialog box 311 prompting the system to run the simulation 303 in the background while exchanging data 320 with the RRS1 interface 304 to track all the places accessed by the robot and the attached spheres. The output result 330 is graphically displayed as a stop envelope volume 331 which includes the swept volume of the spheres. This calculated stop envelope enables the user 301 to inspect the impact of robot's motion deviations in case of sudden stop along its entire path. The user utilizes this envelope to ensure that the robot does not collide with its safety enclosure or at least minimizing such risk.

This example of stop envelope functionality relies on the RRS1 interfaces 304 and is compatible with specific models of Kuka and Fanuc robots. In other examples of stop motion analysis, when using an ABB robot, the robotic stop motion information can be retrieved via the RobotStudio VRC module 304. However, such stop motion analyzes are known to be very time-consuming due to the reliance on the data exchanged with the RRS1 interface and/or with the VRC modules 304.

In general, the known techniques for analyzing a robot's motion behavior during a sudden stop suffer from several types of drawbacks.

Some drawbacks concern the prerequisites. For instance, the robotic application/robotic simulation needs to be connected to the RRS1/VRC module. Additionally, the RRS1/VRC module needs to be extended with a stop category functionality. Moreover, industrial users need to have a license for using the RRS1/VRC module.

Other drawbacks concern the difficulty of use: since previous techniques are based on real simulation engines, the whole simulation conditions must be fulfilled e.g. Human Machine Interface, Programmable Logic Controller with the right signals, etc. so that the engines can run and the RRS1/VRC modules can provide the sudden stop motion information.

Additionally, there are drawbacks related to the slow performances: since known techniques are based on real simulation engines, the speed at which a calculated robotic solution is obtained is very low.

Furthermore, there are drawbacks regarding the lack of scalability: known techniques using RRS/VRC-calculated sudden-stop motion solutions may still be effective for verifying a single predefined robotic path, but they become impractical for path optimization algorithms. As used herein, optimization algorithms refer to any algorithm designed to optimize a robot's path based on KPIs such as e.g. cycle time, energy efficiency, trajectory length, and collision avoidance.

These optimization algorithms are also required to account for sudden robotic stops to ensure safety. To achieve this, they need to process hundreds of potential path options quickly and cannot rely on slowly calculated robotic-stop solutions.

Moreover, there are drawbacks concerning the lack of applicability for autonomous robots: since autonomous robots, by definition, do not operate on fixed programs, they indeed pose greater risks compared to traditional industrial robots; therefore, the ability to select safe solutions for these autonomous robots is key to satisfy safety regulations and prevent risks.

Therefore, improved techniques are desirable.

Therefore, improved techniques for analyzing a motion behavior of a robot during a sudden stop are desirable.

### SUMMARY OF THE DISCLOSURE

Various disclosed embodiments include methods, systems, and computer readable mediums for analyzing a motion behavior of a robot during a sudden stop. A method includes receiving data on a 3D robotic study comprising at least a virtual robot and its robotic locations list path. The method further includes simulating the robot's motion between one or more robotic location-couples of the path; further including the step of applying a stop motion AI-trained predictor for at least one location couple by inputting a set of location couple descriptors and a stop category type to receive as output the corresponding robot's stop poses list. The method further includes analyzing the motion behavior of the robot based on the received robot's stop poses.

Various disclosed embodiments include methods, systems, and computer readable mediums for generating a training dataset for training r training an AI model of a stop motion predictor configured for outputting a robot's stop poses. A method includes receiving a virtual representation of a robot. The method further includes receiving a list of robotic locations. The method further includes exchanging data with a RRS module or with a VRC module. The method further including for a plurality of couples of the list of robotic locations and for a stop category type, simulating the robot' motion to obtain a stop poses list based on the data exchanged with the RRS module or with the VRC module, wherein the locations couple is collected for populating an input training dataset and the robot's stop poses list is collected for populating the output training dataset for the stop category type. The method further includes storing the input and output training dataset to train an AI model of the stop motion predictor.

Various disclosed embodiments include methods, systems, and computer readable mediums for providing a stop motion AI-predictor configured for outputting robot's stop poses between a given robotic location couple including a source and a target location for a specific stop category. A method includes receiving a training dataset with a first interface, wherein said training dataset comprises an input training dataset and an output training dataset, wherein the input training dataset comprises several robotic locations couples of the robot and robotic category type; and the output training dataset comprises, for each robotic location couple, a corresponding list of robot's stop poses. The method further includes training the stop motion AI-trained predictor with the input and output training datasets. The method further includes providing said predictor with a second interface.

A data processing system comprising a processor and an accessible memory or database is also disclosed, wherein the data processing system is configured to implement any of the described methods. Embodiments propose also a non-transitory computer-readable medium encoded with executable instructions that, when executed, cause one or more data processing systems to perform any of the described methods.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented.
Figure 2 illustrates a flowchart for analyzing a motion behavior of a robot during a sudden stop in accordance with disclosed embodiments.
Figure 3 illustrates a block diagram of an example of swept volume estimation of a virtual robot in accordance with the prior art.
Figure 4 illustrates a block diagram for analyzing a motion behavior of a robot during a sudden stop in accordance with disclosed embodiments.
Figure 5 is a drawing with an example of four robotic locations of a robotic location list in accordance with disclosed embodiments.
Figure 6 is a drawing with an example of four intermediate robotic locations around an obstacle in accordance with disclosed embodiments.
Figure 7 is a block diagram with examples of usage of Real Time Robotics ("RTR") mechanism in accordance with disclosed embodiments.

### DETAILED DESCRIPTION

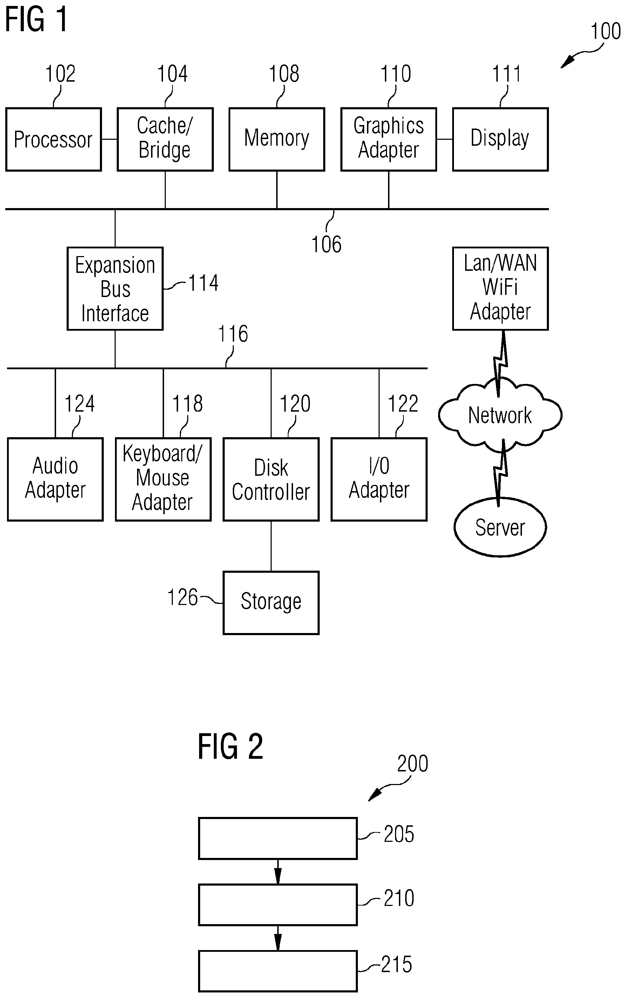

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques for analyzing a motion behavior of a robot during a sudden stop have some drawbacks. The embodiments disclosed herein provide numerous technical benefits, including but not limited to the following examples.

Embodiments do not require computation of the robotic simulation of each motion during a robotic stop.

Embodiments provide results of motion stop behavior of a given specific robot with fast performance.

Embodiments enable to prevent risks due to the unplanned motion behavior in case of robotic stops of the different types of categories.

Embodiments enable to comply with safety regulations and assess risks on a robot's surrounding.

Embodiments enable to analyze the impacts of deviations from planned paths caused by sudden robotic stops.

Embodiments do not need a connection to RRS1 module or to a VRC module.

Embodiments are user friendly.

Embodiments enable to predict stop motion behavior even without fulfilling the whole simulation conditions such e.g. Human Machine Interface ("HMI"), Programmable Logic Controllers ("PLC with the right signals etc.

Embodiments are scalable. For example, embodiments can be implemented in scenarios with a plurality of robots and/or for any robotic path optimization algorithm.

Embodiments enable to select safe solutions for autonomous robots as well.

Embodiments may be used for robot validation purposes. Embodiments may be used to provide a robotic solution for download or a robotic solution during runtime.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but are not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Figure 2 illustrates a flowchart 200 of a method for analyzing a motion behavior of a robot during a sudden stop in accordance with disclosed embodiments. Such method can be performed, for example, by system 100 of Figure 1 described above, but the "system" in the process below can be any apparatus configured to perform a process as described. Of course, the "system" in the following description of the method according to embodiments can be any apparatus suitable for performing the described process.

At act 205, the system receives data on a 3D robotic study comprising at least a virtual robot and its robotic locations list path. As used herein a robotic locations list path or simply "location list" denotes the list of target locations, also known as "robotic locations path", that the robot's end effector shall reach. Usually, the robot needs to reach such target locations list to perform a robotic operation as defined in its robotic program. The robot's end effector is placed at end of the robot kinematic chain, and, may for example be the tip of a tool or of a gripper. It is sometimes known as Tool Center Point Frame ("TCPF") or Tool Center Point ("TCP"). It is noted that the term target, as used herein and in the art, it may also denote the second item T of the (target location Source S, target location Target T) which are the locations couples in a robotic trajectory.

As the skilled persons know each robotic location of the list can be represented with a descriptor of the robot's poses or with a descriptor of the locations coordinates plus one robotic configuration. In fact, if one target location is non-singular, there is a one to one relationship between the robot's pose and the location coupled with a robot's configuration. Therefore, as used herein the term robot's pose or simply pose may denote either a robot's pose or a location plus robot's configuration. Or, alternatively, the term location may sometimes denote a location with configuration or it may sometimes denote a robot's pose. Therefore, at act 205 the data on the target locations, or simply location or targets, can be provided as robotic poses descriptors (e.g. joint values of the robot kinematic chain j1, j2, j3, j4, j5, j6) or as descriptors of target location coordinates plus one of the six configurations like for example elbow-up, elbow down etc (e.g. J3-J5+J6+OH-; J3-J5-J6-OH-; J3-J5+J6-OH-; J3-J5-J6+OH+; J3+J5+J6-OH+). As used herein, the descriptor data on each robotic locations list may be given in terms of 3D cartesian coordinates with one chosen robot's configuration or in terms as robot's poses with joint values or with coordinates. For sake of simplicity the below illustrated exemplary embodiments will mainly use the descriptor notation of robot's pose joints j1, j2, j3, j4, j5, j6 which are the joint values that drive the robotic tool tip to the desired target location. The skilled persons know how to implement embodiments utilizing other descriptors and notations for the target locations.

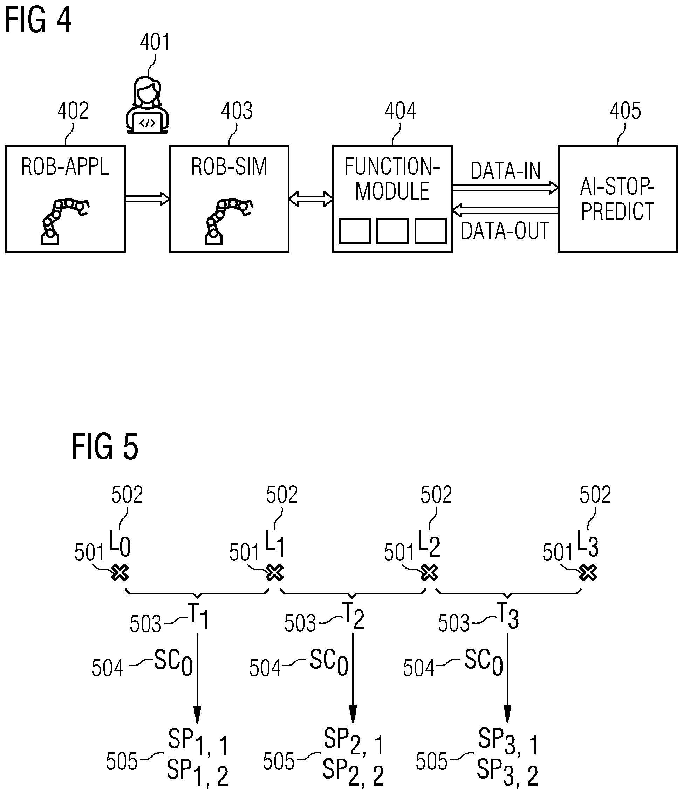

Figure 5 is a drawing with an example of robotic locations list and corresponding stop poses in accordance with disclosed embodiments. The four targets or locations 501 are depicted with a symbol of a cross 501. In embodiments, the data for each robotic location 501 may be provided with a descriptor 502 Li containing the joint values j1, j2, j3, j4, j5, j6 (not shown) of each of the location poses. An example of numerical example may be, assume that the location L0 is home, the location L1 is given with the joint value descriptor (j1= 15, j2=90, j3 = 180, j4=50, j5=60, j6 =100), the location L2 is given with the joint value descriptor (j1= 35, j2=90, J3 = 180, j4=50, j5=60, j6 =100), the location L3 is given with the joint value descriptor (j1= 35, j2=90, J3 = 180, j4=50, j5=60, j6 =100). In other embodiments, the descriptor Li of the robotic locations 501 may be given as cartesian location plus configuration. In embodiments, the descriptor of the location list may comprise the time interval Ti between one location couple. In embodiments, the descriptor of the location list may comprise motion parameters. Assume that in each time interval 503, a sudden stop of Category 0 SC0 occurs then the robot motion trajectory will results in a list 505 of stop poses SPi,j, SPi,k.

At act 210 of Figure 2, the system simulates the motion of the robot between one or more robotic location-couples of the path which further includes the step of applying a stop motion AI-trained predictor for at least one location couple by inputting a set of location couple descriptors and a stop category type to receive as output the corresponding robot's stop poses. Examples of locations couples are source and target couples (S;T) of the location path, e.g. couples (L0; L1); (L1; P2); (L2; L3) and examples of stop poses lists for stop category 0 are respectively {SP1,1; SP1,2}, {SP2,1; SP2,2}, {SP3,1; SP3,2}.

Embodiments include the step of controlling a motion of a real robot according to the simulated robot's stop motion.

At act 215 of Figure 2, the system analyzes the motion behavior of the robot based on the received robot's stop poses. Advantageously, the motion behavior analysis may include a risk assessment of trajectory deviations impacts due to the sudden stop. In embodiments, the step of analyzing the motion behavior of the robot based on the received robot's stop poses may further include one or more steps selected from the group consisting of computing a swept volume of the robot and its attachment; optimizing the path of the robot and its attachment; checking collision of the robot and its attachment. As used herein the term robot's attachment denote a tool attached to the robot and/or an object attached to the tool.

In embodiments, one or more of acts 205, 210 or 215 further utilize a robot simulation, e.g. with a mathematical motion planner or with an AI-based motion planner.

### Algorithms of exemplary embodiments to synthetically generate training datasets

Exemplary embodiments illustrate the main algorithm phases and steps to generate training datasets for training an AI model of a stop motion AI-trained predictor configured for outputting robot's stop pose lists corresponding to an input set of robotic location couples and stop category type. For this purpose, the data processing system 100 might be further configured in accordance with embodiments.

The system receives a virtual representation of a given industrial robot. In exemplary embodiments, the robot may be a specific model of a KUKA robot. The received virtual robot may preferably be used within a robotic simulation tool connected to a RRS1/VRC module to synthetically generate the training datasets for the given robot. In embodiments, the training datasets are specific for the given type of robot and are then used to train the AI model of the stop pose predictor for the specific given robot. In embodiments, the input training dataset consists of several location couples (preferably reachable by the robot) and the output training dataset consists of the lists of robotic stop poses for a specific stop category type.

In embodiments, the AI-training dataset for the stop motion predictor may be synthetically generated by performing the following steps:
1) loading the virtual robot in a 3D robotic application;
2) for each j oint of the robot, receiving the lower and upper limits of the joint range;
3) randomly setting values for each joint within its range;
4) generating a robotic location;
5) randomly setting motion parameters values (e.g. motion type, speed, zone, acceleration etc);
6) repeating steps 3)-5) to create other robotic locations;
7) after having generated several robotic locations, playing the simulation with Stop Category 0,1,2 whilst being connected to a RRS1/VRC module to receive the robot's stop motion poses;
8) during simulation, collecting the input data (e.g. robotic locations with motion parameters) and corresponding output data (robot's poses list at different types of stop categories 0,1,2) to populate training dataset to train the AI-model of the stop motion predictor.

In embodiments, the data of the robotic locations and of the stop poses lists are organized in manners that are suitable to define input and output datasets both for AI training and usage of the AI-module or predictor.

Exemplary embodiments of input dataset for Machine Learning ("MI,") training and ML usage comprise a robot's location couple (Ls, L_{T}) with motion parameters and Stop Category Type 0,1,2. Exemplary embodiments of output dataset for ML training and ML usage comprise stop poses list *List*<*robot's pose, time* > of the robot motion if a stop category event occurred for a plurality of points from the source location L_{S} until the target location L_{T}.

In embodiments, the time parameter in the input or in the output dataset is an optional parameter.

In embodiments, the system may filter out all the poses of the planned robot trajectory and provide as results the stop poses as deviations from the planned trajectory.

In embodiments, for the source location, current motion parameters may include speed, zone and, for the target location, motion parameters may include speed, zone, motion type, acceleration. In summary, the source location data L_{S} comprise information describing where the robot currently is and the target location data L_{T} comprise information describing the target that the robot should reach. Assume that the source and target locations are given as robot's poses with joint values, a numerical example of source location and target location may be:
*L_{S}: j1= 0, j2=90, j3 = 180, j4=50, j5=60, j6 =100; speed = 20; zone = fine;*
*L_{T}: j1= 50, j2=90, j3 = 180, j4=50, j5=60, j6 =100; speed = 20; zone = fine; acceleration =10; motion type = L.*

As shown in Figure 5, assume that for a given robot it takes three simulation time intervals T1, T2, T3 to move normally from the source (L_{S}) to the target (L_{T}) and there is a Stop Category 0 on each time interval 503.

For example, assume that from location home L0 to location L3 there are three locations L1, L2, L3 given as poses. At interval Ti, the robot arrives at location Li and then it stops with stop category 0 and SPi,j are the stop motion poses with their delta times (optional) as shown in the numerical example below.

### Numerical Example:

### Simulation Interval T1:

- *Normal move from current (home) pose to the next pose:*
   *L1: j1= 15, j2=90, j3 = 180, j4=50, j5=60, j6 =100, time = 0.01*
- *At Stop Category 0:*
   *SP1,1: j1 = 18,j2=100, J3 = 180, j4=50, j5=60, j6 =80; time 0.001*
   *SP1,2: j1= 20, j2=120, J3 = 180, j4=50, j5=60, j6 =80; time 0.005*

### Simulation Interval T2:

- *Normal move from current pose to the next pose:*
   *L2: j1= 35, j2=90, j3 = 180, j4=50, j5=60, j6 =100; time = 0.02;*
- *At Stop Category 0:*
   *SP2,1: j1= 40, j2=95, j3 = 180, j4=50, j5=60, j6 =80; time 0.001;*
   *SP2, 2: j1 = 42,j2=95,j3 = 180, j4=50, j5=60, j6 =80; time 0.007;*

### Simulation interval 3, T3:

- *Normal from current pose to the next pose:*
   *L3: j1= 45, j2=90, j3 = 180, j4=50, j5=60, j6 =100; time = 0.03;*
- *At Stop Category 0:*
   *SP3,1: j1= 48, j2=80, j3 = 180, j4=50, j5=60, j6 =80; time 0.003;*
   *SP3,2: j1= 49, j2=82, j3 = 180, j4=50, j5=60, j6 =80; time 0.002;*

The above is a simplified numerical example which provides an exemplary embodiment of dataset preparation for training the AI-predictor and/or for applying the AI-predictor.

### Algorithms of exemplary embodiments to train the Al model of the module

Exemplary embodiments illustrate the main algorithm phases and steps to provide an AI module configured for outputting robot's stop poses list are illustrated below. For this purpose, the data processing system 100 according to embodiments might be further configured to provide a trained robotic program AI module.

In embodiments, the AI module of a given robot is taught with the input training dataset comprising robotic locations and a stop category type and the output training dataset comprising the corresponding stop robots poses lists. Assume each robotic location and each robot pose list is described via a descriptor comprising at least the location data and optionally the motion parameters and the time interval. As the skilled persons know there are several different ways to describe and represent the content of a robotic location of the location targets path of industrial robots.

The training datasets are elaborated to extract a learned function with a Machine Learning ("MI,") or Artificial Intelligence ("AI") algorithm, preferably with a ML or AI algorithm selected from the group of supervised learning algorithms. The learned function is such that it can map at its best the input datasets into the output datasets. The goal of the used ML algorithm is to approximate the mapping function so well that for a given robot's location couple and stop category as input, the corresponding robot's stop pose list can be predicted as output data for that given input data. Extracted learned function data are used to generate a trained robotic program AI module 401 for the specific robot used. The AI module 401 computes a prediction of the stop poses of this specific robot so that - when receiving as input a list of robotic locations and a stop category type - it provides as resulting output a robot's stop poses list.

In embodiments, different AI-modules are trained for different types of models of robots. In embodiments, the AI module 405 may be used as a stand-alone module, e.g. a cloud service to predict a robot stop motion. In other embodiments, the AI module 405 may be used as a stand-alone module by a virtual simulation tool 403.

In other embodiments, the stop motion prediction module 405 may be embedded within a virtual simulation tool 403 or in hybrid configurations e.g. standalone and/or embedded. In embodiments, the AI-trained stop motion module 405 may be on the cloud, e.g. part of a CAR tools installation, an RTR system and/or in the Edge. In embodiments, the training may be performed by a CAR tool vendor, by a robot vendor and/or by end users. In embodiments, a virtual robotic simulation tool 403 simulates the motion behavior of one or more specific robots of one or more specific robot vendors with a plurality of different AI-trained stop predictor modules 405.

### Algorithms of exemplary embodiments to analyze a motion behavior of a robot during a sudden stop

In exemplary embodiments, the main algorithm phases and steps to analyze the robot's motion behavior are illustrated with the help of Figure 4. Figure 4 illustrates a block diagram for analyzing a motion behavior of a robot during a sudden stop in accordance with disclosed embodiment.

The system is provided with an AI-trained prediction module 405 configured for outputting a prediction of a robot's stop pose list 402 when provided with input data comprising robotic locations path and stop category type.

In embodiments, the user 401 loads a factory study (not shown) in the 3D robotic application 402. To analyze the motion behavior of the robot during a sudden stop, the user applies the stop pose predictor 405 via the robotic simulation module 403. In embodiments, the user analyzes the robot's stop motion behavior by selecting a desired functionality via a function module 404. Examples of analysis functionalities include, but are not limited by, computation of a robot's swept volume and its attachment, optimizing the path of the robot's and its attachment, checking collision of the robot's and its attachment.

For example, the step of optimizing the path of the robot's and its attachment may include the step of checking a collision in case of Stop Category 0 for a new/optimized robotic program; whilst the step of checking collision of the robot's and its attachment may include the step of checking a collision in case of Stop Category 0 for the existing robotic program.

In embodiments, the analysis functionalities may be utilized in various use case scenarios.

In exemplary embodiments, the user may analyze the robot's motion behavior by computing a robot's swept volume 404 in case of a specific category of sudden robotic stop. For example, the user 401 loads the factory in a virtual study and selects a robot's operation, a type of stop category and the "swept volume or stop envelope" functionality. The system plays the simulation together with the AI-predictor 405 to predict the simulation output. For each couple of source and target location, the AI-predictor is configured to output the stop category robotic motion. The system moves the robot with its attachment to each predicted stop pose and generates the swept volume. The swept volume functionality may advantageously be used to check that there is no unexpected collision in an event of a sudden robotic stop.

In other exemplary embodiments, the user may analyze the robot's motion behavior by optimizing the path of the robot and its attachment 404 in case of a specific category of sudden robotic stop. For example, the user 401 loads the factory in a virtual study and selects a robot's operation, a type of stop category and an optimization functionality. The system plays the simulation together with the AI-predictor 405 to predict the simulation output. For any valid path that passed the optimization for a certain KPI, the system makes sure that even in event of sudden stops the optimized path is safe. For each couple of source and target location, the AI-predictor is configured to output the stop category robotic motion. The system moves the robot with its attachment to each predicted stop pos. The path optimization functionality may advantageously be used to check that there is no unexpected collision event of a sudden robotic stop.

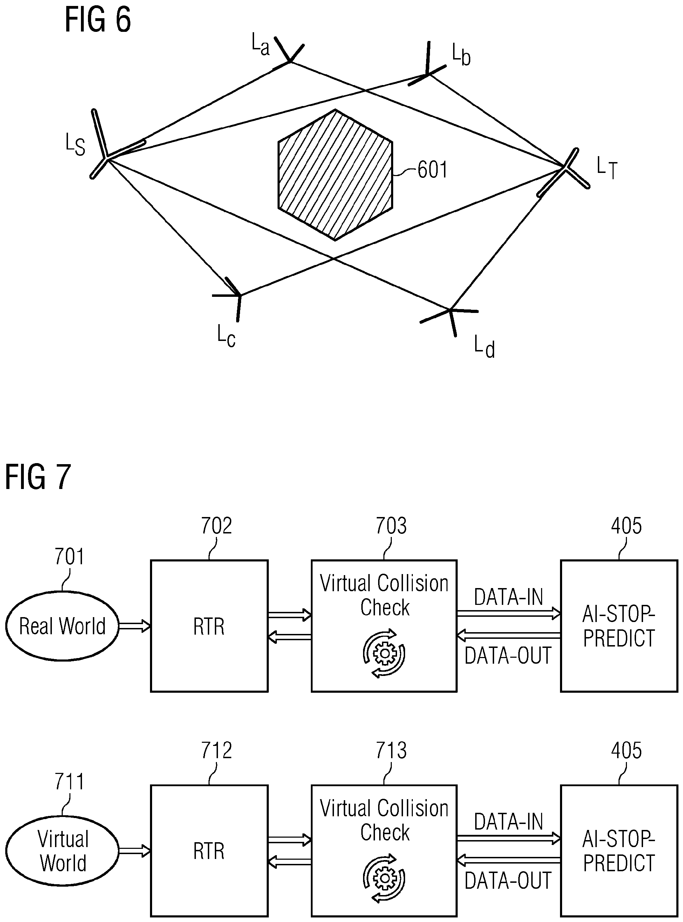

In other embodiments, the path optimization step may include the step of selecting the best option out of many options as shown with the exemplary embodiment of Figure 6. Figure 6 is a drawing with an example of four intermediate robotic locations around an obstacle in accordance with disclosed embodiments. In embodiments, assume a schematic example of robot required to reach a target location from a source location whilst avoiding hitting an obstacle in between. The robot (not shown) should go from location L_{S} to location L_{T} and it needs to avoid an obstacle 601 positioned in between the two location as shown in the top view of Figure 6. The system computes possible robotic path around the obstacle 601, and as a result, the robot could use one of four possible intermediate locations La, Lb, Lc, Ld. The system needs to select the best option out of many locations. The system evaluates each location according to predefined KPIs also by applying the AI-predictor to analyze the stop motion and it selects then best location. For example, assume the system rejects location LA because its cycle time KPI is too long, it rejects location Lb because its energy KPI consumption is too long, it rejects location Lc because its robotic stop category 0 is too risky and therefore it selects location Ld as the intermediate robotic location to use. In summary, in embodiments, departing from a required robotic task, optimization algorithms can make use of the AI-predictor to compute robotic tasks that are both optimized and safe also from robotic-stops. In embodiments, in case of edge cases whereby for any of the possible solution there is a certain stop motion risk, the system, by making use of the AI-predictor is able to pick the solution which has a reduced risk e.g. such as quick stop, a rare stop, a small damage stop etc.

In other embodiments, the path optimization step may include the step of utilizing an AI-trained stop module in conjunction with a RTR mechanism as shown with the exemplary embodiment of Figure 7. In embodiments, assume there is a system which makes use of RTR module to find a collision-free robotic path. Figure 7 is a block diagram with examples of usage of RTR mechanism in accordance with disclosed embodiments. For example, a RTR module 702, 712 gets weld points data to find the best way for the robot to reach such weld points without any collision. In embodiments, as shown in Figure 7, the AI-trained stop motion predictor 405 can advantageously be integrated into the RTR mechanism so that the found robotic path is collision free and safe even in a scenario of a sudden robotic stop. In exemplary embodiments, assume that the RTR module 702 gets from the real world 701, e.g. by camera, the weld points data and returns a path that can enter a process of a virtual collision check 703 which evaluates also the scenario of sudden stops by applying the AI-trained stop motion predictor 405 in accordance with embodiments. In another example, the weld points may be inserted to the RTR system by loading a basic robotic program only with the real activities like only weld locations (without via locations). In other exemplary embodiments, assume that the RTR module 702 gets from the virtual world 701, e.g. by digital twin, the weld points data and returns a path that can enter a process of a virtual collision check 713 which evaluates also the scenario of sudden stops by apply the AI-trained stop motion predictor 405 in accordance with embodiments.

In embodiments, the AI-trained stop predictor 405 may advantageously be used in optimization algorithms whereby the Automatic Path Planner of Process Simulate provides a fixed robotic solution to download. In embodiments, the AI-trained stop predictor 405 may conveniently be used in optimization algorithms whereby a connection of Process Simulate with RTR module provide a robotic solution at runtime.

In other exemplary embodiments, the user may analyze the robot's motion behavior by checking collision of the robot and its attachment 404 in case of a specific category of sudden robotic stop. Examples include, but are not limited by, checking whether according to the existing robotic program the robot is going to stop on time in an event of a sudden stop. For example, the user 401 loads the factory in a virtual study and selects a robot's operation, a type of stop category and the functionality checking collision. The user sets a common risky scenario to check whether the robot stops on time e.g. human opens a door and comes into the cell. The system plays the simulation together with the AI-predictor 405 to predict the simulation output. For each couple of source and target location, the AI-predictor is configured to output the stop category robotic motion. The system moves the robot with its attachment to each predicted stop pose. Advantageously, this functionality enables to check that, with an existing robotic program, the robot is going to stop on time before a possible hit.

Of course, those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A computer implemented method for analyzing a motion behavior of a robot during a sudden stop, the method including the steps of:
a) receiving data (205) on a 3D robotic study comprising at least a virtual robot and its robotic locations list path;
b) simulating (210) the robot's motion between one or more robotic location-couples of the path further including the step of applying a stop motion AI-trained predictor for at least one location couple by inputting a set of location couple descriptors and a stop category type to receive as output the corresponding robot's stop poses list;
c) analyzing (215) the motion behavior of the robot based on the received robot's stop poses.

2. The method of claim 1, wherein the stop motion AI-trained predictor is trained via a regression supervised learning algorithm.

3. The method of claim 1 or 2, wherein item c) further comprises one or more steps selected from the group consisting of:
- computing a swept volume of the robot and its attachment;
- optimizing a path of the robot and its attachment;
- checking a collision of the robot and its attachment;

4. The method of any of the previous claims, wherein item a), b) or c) uses a robotic simulation.

5. The method of any of the previous claims, further comprising controlling a motion of a real robot according to the simulated robot motion of item b).

6. The method of any of the previous claims, wherein the robotic location list comprises robotic motion parameters and/or time.

7. A data processing system comprising:
a processor; and
an accessible memory, the data processing system particularly configured to:
a) receive data on a 3D robotic study comprising at least a virtual robot and its robotic locations list path;
b) simulate the robot's motion between one or more robotic location-couples of the path further configured to include the step of applying a stop motion AI-trained predictor for at least one location couple by inputting a set of location couple descriptors and a stop category type to receive as output the corresponding robot's stop poses;
c) analyze the motion behavior of the robot based on the received robot stop poses.

8. A non-transitory computer-readable medium encoded with executable instructions that, when executed, cause ono or more data processing system to:
a) receive data on a 3D robotic study comprising at least a virtual robot and its robotic locations list path;
b) simulate the robot's motion between one or more robotic location-couples of the path further configured to include the step of applying a stop motion AI-trained predictor for at least one location couple by inputting a set of location couple descriptors and a stop category type to receive as output the corresponding robot's stop poses;
c) analyze the motion behavior of the robot based on the received robot stop poses.

9. A computer implemented method for generating a training dataset for training an AI model of a stop motion predictor configured for outputting a robot's stop poses, the method comprising:
- receiving a virtual representation of a robot;
- receiving a list of robotic locations;
- exchanging data with a RRS module or with a VRC module;
- for a plurality of couples of the list of robotic locations and for a stop category type, simulate the robot' motion to obtain a stop poses list based on the data exchanged with the RRS module or with the VRC module, wherein the locations couple is collected for populating an input training dataset and the robot's stop poses list is collected for populating the output training dataset for the stop category type;
- storing the input and output training dataset to train an AI model of the stop motion predictor.

10. The method of claim 9, wherein the list of robotic locations are synthetically generated by performing the following steps:
- loading a virtual robot in a 3D robotic application;
- for each joint of the robot, setting random values within the joint lower and upper limits;
- creating a corresponding robotic location; and,
- setting random motion parameters.

11. A computer implemented method for providing a stop motion AI-predictor configured for outputting robot's stop poses between a given robotic location couple including a source and a target location for a specific stop category, the method comprising:
- receiving a training dataset with a first interface, wherein said training dataset comprises an input training dataset and an output training dataset, wherein the input training dataset comprises several robotic locations couples of the robot and robotic category type; and the output training dataset comprises:
for each robotic location couple, a corresponding list of robot's stop poses;
- training the stop motion AI-trained predictor with the input and output training datasets;
- providing said predictor with a second interface.
